Europäisches Patentamt

European Patent Office

Office européen des brevets

(19)

(11) Numéro de publication: **0 121 488**

**A1**

(12) **DEMANDE DE BREVET EUROPEEN**

(21) Numéro de dépôt: **84440013.5**

(22) Date de dépôt: **30.03.84**

(51) Int. Cl.³: **F 16 H 37/04**
**B 61 C 11/02, B 60 K 17/04**

(30) Priorité: **31.03.83 FR 8305493**

(43) Date de publication de la demande:
**10.10.84 Bulletin 84/41**

(84) Etats contractants désignés:
**AT BE CH DE GB IT LI LU NL SE**

(71) Demandeur: **WECO Constructions Mécaniques S.A.**
**33, rue Henri Lebert**
**F-68800 Thann(FR)**

(72) Inventeur: **Meyer, François**
**22b, rue du Chemin de Fer**
**F-68620 Bitschwiller les Thann(FR)**

(74) Mandataire: **Nuss, Pierre**
**10, rue Jacques Kablé**
**F-67000 Strasbourg(FR)**

(54) **Réducteur de vitesse à engrenages, en particulier pour téléphérique, ou analogue.**

(57) La présente invention concerne un réducteur de vitesse à engrenages, en particulier pour téléphérique, ou analogue.

Réducteur caractérisé en ce qu'il est monté directement sur l'arbre (12) de la poulie (11), et est pourvu d'une part, d'un arbre de sortie creux (2) et d'un bras de réaction (3) solidaire des couronnes dentées (1') du réducteur et servant à la reprise du couple sur l'infrastructure (14), et, d'autre part, d'une lanterne de montage (4) d'un moteur électrique d'entraînement principal (5) côté arbre d'entrée (6), qui est lié à ce dernier par un accouplement, en ce qu'un dispositif inverseur débrayable est monté sur l'arbre d'entrée (6), dans le carter (1), et relié à un arbre d'entrée auxiliaire (25) pour la commande par un moteur auxiliaire (25'), en ce qu'il est muni d'un arbre de sortie (9) coopérant avec un dispositif de freinage (10), et en ce que l'arbre (12) de la poulie (11) est monté à encastrement de part et d'autre de la poulie (11) dans deux paliers (13) de l'infrastructure (14) et coopère par une extrémité avec l'arbre de sortie creux (2) du réducteur, de sorte que ce dernier est démontable sans dépose du câble porteur.

Fig. 1

EP 0 121 488 A1

0121488

WECO Constructions Mécaniques, S.A
33, rue Henri Lebert
68800 THANN (FR)

Réducteur de vitesse à engrenages,
en particulier pour téléphérique, ou analogue

La présente invention concerne le domaine de la construction de réducteurs de vitesse, en particulier pour téléphérique, ou analogue, et a pour objet un tel réducteur à engrenages.

Les réducteurs de ce type existant actuellement sont généralement constitués sous forme d'un carter logeant les engrenages, dont le ou les arbres d'entrée sont reliés au moyen de courroies trapézoïdales à ou aux arbres d'un ou de plusieurs moteurs d'entraînement, et dont la poulie d'entraînement du câble porteur est montée en porte-à-faux sur l'arbre de sortie du réducteur.

Ces réducteurs connus présentent, cependant, un encombrement et un poids très importants dus à la nécessité de prévoir un carter suffisamment rigide pour éviter les déformations consécutives à un montage en porte-à-faux de la poulie, et ayant des répercussions sur l'infrastructure. En outre, le montage en porte-à-faux de la poulie ne permet pas d'intervenir dans le réducteur, par exemple en cas de panne, sans dépose préalable du câble porteur. Enfin, la transmission par courroies trapézoïdales entre le ou les arbres d'entrée et le ou les arbres moteurs est bruyante et d'un mauvais rendement.

Dans ces réducteurs connus, un moteur auxiliaire d'entraînement, généralement sous forme d'un moteur thermique peut être requis, et est relié audit réducteur avec interposition d'un réducteur-inverseur.

Un tel réducteur-inverseur augmente cependant l'encombrement de l'installation ainsi que son poids, avec des répercussions correspondantes sur l'infrastructure. En outre, le prix de revient de l'ensemble est accru de manière correspondante.

La présente invention a pour but de pallier ces inconvénients.

Elle a, en effet, pour objet un réducteur de vitesse à engrenages, en particulier pour téléphérique, ou analogue, caractérisé en ce qu'il est monté directement sur l'arbre de la poulie, et est pourvu, d'une part, d'un arbre de sortie creux et d'un bras de réaction solidaire du carter du réducteur servant à la reprise du couple sur l'infrastructure, et d'autre part, d'une lanterne de montage d'un moteur électrique d'entraînement principal côté arbre d'entrée, qui est lié à ce dernier par un accouplement, en ce qu'un dispositif inverseur débrayable est monté sur l'arbre d'entrée, dans le carter, et relié à un arbre d'entrée auxiliaire pour la commande par un moteur auxiliaire, en ce qu'il est muni d'un arbre de sortie coopérant avec un dispositif de freinage, et en ce que l'arbre de la poulie est monté à encastrement de part et d'autre de la poulie dans deux paliers de l'infrastructure et coopère par une extrémité avec l'arbre de sortie creux du réducteur, de sorte que ce dernier est démontable sans dépose du câble porteur.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

La figure 1 est une vue en élévation latérale d'un réducteur conforme à l'invention en position de service, et

la figure 2 est une vue à plus grande échelle et en coupe du réducteur de la figure 1.

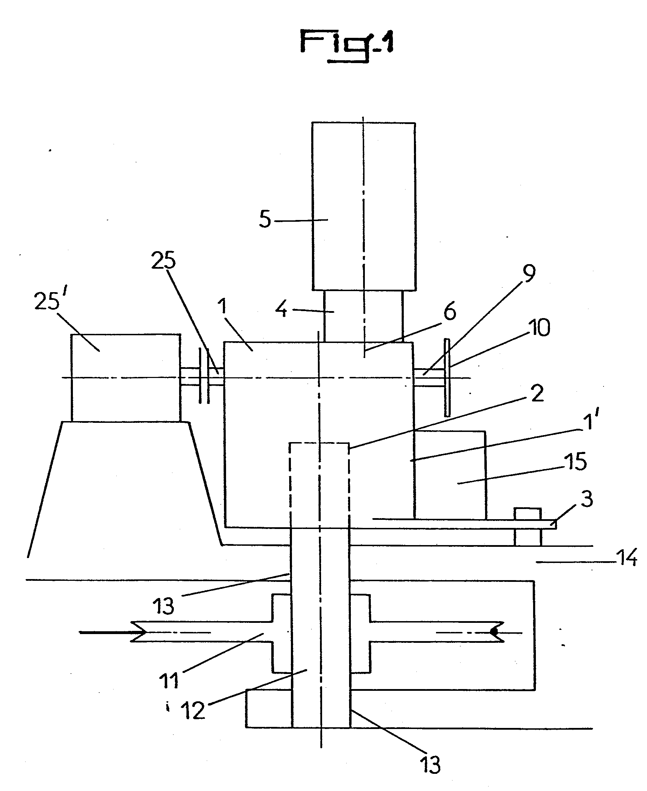

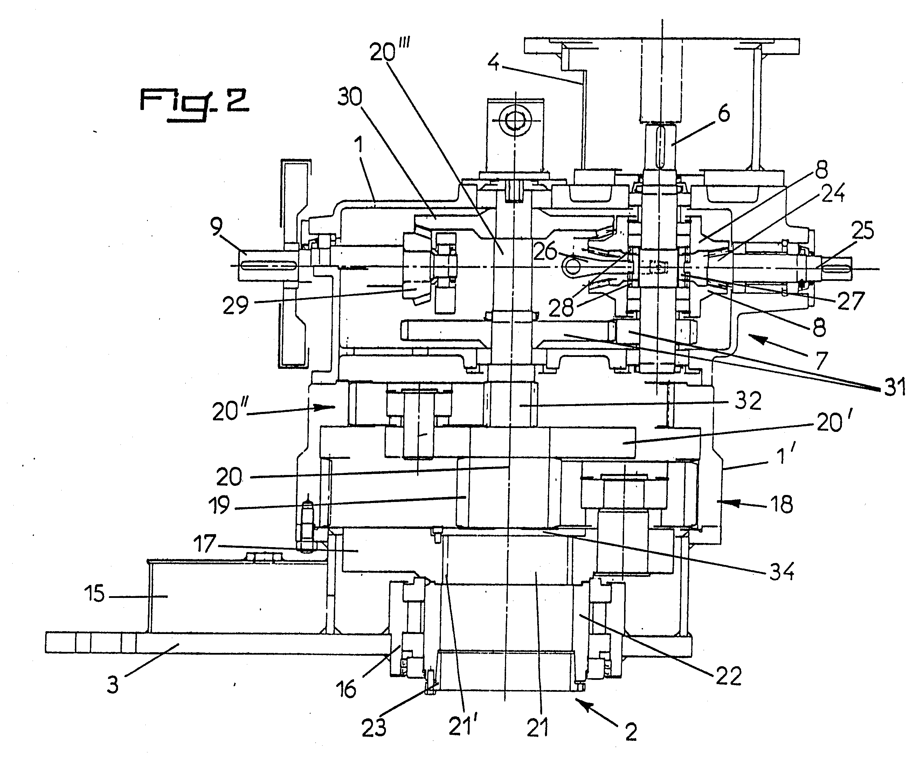

Conformément à l'invention, et comme le montrent plus particulièrement, à titre d'exemple, les figures 1 et 2 des dessins annexés, le réducteur de vitesse à engrenages, en particulier pour téléphérique, ou analogue, est essentiellement constitué par un ensemble carter 1 - couronnes dentées 1', par un arbre de sortie creux 2 logé dans un bras de réaction 3, par une lanterne 4 de montage d'un moteur électrique d'entraînement principal 5 sur l'arbre d'entrée 6, par un dispositif inverseur 7 débrayable, qui est monté sur l'arbre d'entrée 6, à l'intérieur du carter 1, par un arbre de sortie 9 coopérant avec un dispositif de freinage 10, et par une poulie 11 montée sur un arbre 12 encastré, de part et d'autre de la poulie 11 dans deux paliers 13 de l'infrastructure 14, cet arbre 12 coopérant par une extrémité avec l'arbre de sortie creux 2 du réducteur.

Le bras de réaction 3 est solidarisé avec les couronnes 1' au moyen de vis, est destiné à la reprise du couple sur l'infrastructure 14, et comporte un réservoir supplémentaire d'huile 15/ ainsi qu'un palier à roulements 16 servant au guidage de l'extrémité de l'arbre creux 2, qui est constitué par un porte-satellite 17 d'un train d'engrenages planétaires 18, dont le pignon 19 est solidaire d'un arbre intermédiaire 20, qui est entraîné au moyen du porte-satellite 20' d'un autre train d'engrenages planétaires 20", dont le pignon est solidaire de l'arbre secondaire 20"' du réducteur, ce porte-satellite 17 présentant un trou central 21 muni de cannelures 21', destiné à coopérer avec l'extrémité de l'arbre 12 de forme et de diamètre correspondants, de la poulie 11, par un élément médian 22, et par une bague conique 23 de serrage axial sur l'arbre 12.

La lanterne 4 est solidarisée avec le carter 1 de manière connue, et sert à une fixation centrée du moteur électrique principal 5 sur l'extrémité de l'arbre d'entrée 6.

Le dispositif inverseur débrayable 7 est constitué par deux roues coniques 8, montées à rotation libre sur l'arbre d'entrée 6, et engrenant avec un pignon conique correspondant 24 solidaire d'un arbre d'entrée auxiliaire 25 pour un moteur auxiliaire 25', et par une fourche 26 de commande d'inversion du dispositif 7 actionnant un manchon denté 27 solidaire en rotation de l'arbre 6 et déplaçable en translation sur ce dernier, et pouvant coopérer avec des dentures intérieures correspondantes 28 des roues coniques 8, en position de service.

Conformément à une caractéristique de l'invention, la fourche 26, qui est commandée manuellement par son levier extérieur ou carter 1, coopère, en position de service, avec des contacts de fin de course (non représentés) empêchant une mise en marche intempestive du moteur principal.

L'arbre de sortie 9, coopérant avec un dispositif de freinage 10, est muni à son extrémité pénétrant dans le carter 1 d'un pignon conique 29, qui coopère avec une roue conique 30 solidaire de l'arbre secondaire 20''' pour former un train d'engrenages perpendiculiares d'entraînement de l'arbre 9 (figure 2).

La liaison d'entraînement entre l'arbre d'entrée 6 et l'arbre secondaire 20''' est réalisée au moyen d'un train d'engrenages parallèles dont les roues 31 peuvent être interchangées en vue d'adapter le rapport de transmission global du réducteur aux besoins.

En marche normale, c'est-à-dire avec entraînement de l'ensemble par le moteur principal 5, la fourche 26 de commande d'inversion du dispositif inverseur 7 est en position médiane de débrayage, de sorte que les engrenages perpendiculaires 8-24 sont à l'arrêt et que l'arbre secondaire 20"' est entraîné par le train d'engrenages parallèles 31. Le pignon 32, prévu à l'extrémité de l'arbre 20"', et faisant partie du train d'engrenages planétaires 20", entraîne alors le porte-satellite 20' de ce dernier, et ainsi l'arbre intermédiaire 20 portant le pignon 19, qui engrène avec les roues dentées du porte-satellite 17 du train d'engrenages planétaires 18, de sorte que l'arbre creux 2 est également entraîné.

L'arbre creux 2 est avantageusement fermé au niveau du porte-satellite 17 tourné vers le pignon 19 par un couvercle 34 formant support pour l'arbre intermédiaire 20, qui est flottant, et dont l'autre extrémité s'appuie sur l'extrémité de l'arbre secondaire 20"'.

Le réservoir supplémentaire d'huile 15 peut avantageusement servir de support au dispositif de freinage 10 et permet d'assurer un approvisionnement continu et optimal d'huile de lubrification.

Grâce à l'invention, il est possible de réaliser un réducteur, en particulier pour téléphérique, de forme compacte, c'est-à-dire présentant un poids et un volume considérablement réduits par rapport aux réducteurs existants de ce type, à savoir, une réduction de poids d'au moins 50 % à puissance égale. Ce réducteur permet de remplir les fonctions de support moteur principal, de réduction de vitesse, de commande de l'arbre de la poulie, de sortie d'arbre pour un frein, ainsi que de sortie d'arbre avec inverseur pour un moteur auxiliaire, tout en étant d'un fonctionnement silencieux, aucun engrenage conique ne transmettant un couple en charge normale. En outre, le montage du réducteur sur l'extrémité de l'arbre vertical de la poulie, avec liaison d'entraînement par cannelures et blocage axial par cône de serrage, permet un démontage aisé du réducteur sans dépose du câble porteur.

- 6 -

Enfin, le prix de revient d'un tel réducteur est nettement inférieur à celui d'un réducteur existant seul, compte non-tenu des accessoires nécessaires à ce dernier, tels que supports, réducteur-inverseur, etc...

Bien entendu, l'invention n'est pas limitée au mode de réalisation décrit et représenté aux dessins annexés. Des modifications restent possibles, notamment du point de vue de la constitution des divers éléments, ou par substitution d'équivalents techniques, sans sortir pour autant du domaine de protection de l'invention.

- 1 -

0121488

- R E V E N D I C A T I O N S -

1. Réducteur de vitesse à engrenages, en particulier pour téléphérique, ou analogue, caractérisé en ce qu'il est monté directement sur l'arbre (12) de la poulie (11), et est pourvu d'une part, d'un arbre de sortie creux (2) et d'un bras de réaction (3) solidaire des couronnes dentées (1') du réducteur et servant à la reprise du couple sur l'infrastructure (14), et, d'autre part, d'une lanterne de montage (4) d'un moteur électrique d'entraînement principal (5) côté arbre d'entrée (6), qui est lié à ce dernier par un accouplement, en ce qu'un dispositif inverseur débrayable (7) est monté sur l'arbre d'entrée (6), dans le carter (1), et relié à un arbre d'entrée auxiliaire (25) pour la commande par un moteur auxiliaire (25'), en ce qu'il est muni d'un arbre de sortie (9) coopérant avec un dispositif de freinage (10), et en ce que l'arbre (12) de la poulie (11) est monté à encastrement de part et d'autre de la poulie (11) dans deux paliers (13) de l'infrastructure (14) et coopère par une extrémité avec l'arbre de sortie creux (2) du réducteur, de sorte que ce dernier est démontable sans dépose du câble porteur.

2. Réducteur, suivant la revendication 1, caractérisé en ce que le bras de réaction comporte un réservoir supplémentaire d'huile (15) ainsi qu'un palier à roulements (16) servant au guidage de l'extrémité de l'arbre creux (2), qui est constitué par un porte-satellite (17) d'un train d'engrenages planétaires (18), dont le pignon (19) est solidaire d'un arbre intermédiaire (20), qui est entraîné au moyen du porte-satellite (20') d'un autre train d'engrenages planétaires (20") dont le pignon est solidaire de l'arbre secondaire (20"') du réducteur, ce porte-satellite (17) présentant un trou central (21) muni de cannelures (21'), destiné à coopérer avec l'extrémité de l'arbre (12) de forme et de diamètre correspondants, de la poulie (11), par un élément médian (22), et par une bague conique (23) de serrage axial sur l'arbre (12).

3. Réducteur, suivant la revendication 1, caractérisé en ce que le dispositif inverseur débrayable (7) est constitué par deux roues coniques (8), montées à rotation libre sur l'arbre d'entrée (6), et engrenant avec un pignon conique correspondant (24) solidaire d'un arbre d'entrée auxiliaire (25) pour un moteur auxiliaire (25'), et par une fourche (26) de commande d'inversion du dispositif (7) actionnant un manchon denté (27) solidaire en rotation de l'arbre (6) et déplaçable en translation sur ce dernier, et pouvant coopérer avec des dentures intérieures correspondantes (28) des roues coniques (8), en position de service.

4. Réducteur, suivant l'une quelconque des revendications 1 et 3, caractérisé en ce que la fourche (26), qui est commandée manuellement par son levier extérieur au carter (1), coopère, en position de service, avec des contacts de fin de course empêchant une mise en marche intempestive du moteur principal.

5. Réducteur, suivant la revendication 1, caractérisé en ce que l'arbre de sortie (9), coopérant avec un dispositif de freinage (10), est muni à son extrémité pénétrant dans le carter (1) d'un pignon conique (29), qui coopère avec une roue conique (30) solidaire de l'arbre secondaire (20"') pour former un train d'engrenages perpendiculaires d'entraînement de l'arbre (9).

6. Réducteur, suivant l'une quelconque des revendications 1, 2 et 5, caractérisé en ce que la liaison d'entraînement entre l'arbre d'entrée (6) et l'arbre secondaire (20"')

est réalisée au moyen d'un train d'engrenages parallèles dont les roues (21) peuvent être interchangées en vue d'adapter le rapport de transmission global du réducteur aux besoins.

7. Réducteur, suivant l'une quelconque des revendications 1, 2 et 5, caractérisé en ce que l'arbre creux (2) est avantageusement fermé au niveau du porte-satellite (17) tourné vers le pignon (19) par un couvercle (34) formant support pour l'arbre intermédiaire (20) qui est flottant, et dont l'autre extrémité s'appuie sur l'extrémité de l'arbre secondaire (20''').

# Fig.1

Fig. 2

**0121488**

Numéro de la demande

## Office européen des brevets

## RAPPORT DE RECHERCHE EUROPEENNE

EP 84 44 0013

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | CH-A- 634 785 (A. LÖRTSCHER)<br>* Figures 3,4,5,6; page 3, colonne 1, ligne 53 - page 3, colonne 2, ligne 57 * | 1 | F 16 H 37/04<br>B 61 C 11/02<br>B 60 K 17/04 |
| A | DE-A-2 165 286 (LOHMANN & STOLTERFOHT AG)<br>* Figure 1; page 4, ligne 22 - page 5, ligne 25 * | 1,2 | |
| A | EP-A-0 002 086 (SKF)<br>* Figures 1,3,5; page 6, lignes 7-18 * | 1,3 | |
| A | FR-A-2 216 484 (RHEINSTAHL AG)<br>* En entier * | 2 | |

- - - - -

**DOMAINES TECHNIQUES RECHERCHES (Int. Cl. ³)**

F 16 H
B 60 K
B 61 C
B 61 B

Le présent rapport de recherche a été établi pour toutes les revendications

| Lieu de la recherche<br>LA HAYE | Date d'achèvement de la recherche<br>30-05-1984 | Examinateur<br>HARRISON M.C. |
|---|---|---|